# EUROPÄISCHE PATENTSCHRIFT

(11) **EP 4 380 759 B1**
(45) Veröffentlichungstag und Bekanntmachung des Hinweises auf die Patenterteilung: **09.07.2025**
(21) Anmeldenummer: 22761223.1
(22) Anmeldetag: 05.08.2022
(51) Int. Cl.: B25J 9/00

(54) **EXOSKELETT MIT ELASTISCHEM GELENK UND GELENK ZUR ELASTISCHEN VERBINDUNG**
EXOSKELETON HAVING AN ELASTIC JOINT, AND JOINT FOR ELASTIC CONNECTION
EXOSQUELETTE À ARTICULATION ÉLASTIQUE ET ARTICULATION POUR LA LIAISON ÉLASTIQUE

(30) Priorität: 06.08.2021 DE 102021208609
(43) Veröffentlichungstag der Anmeldung: 12.06.2024
(73) Patentinhaber: Fraunhofer-Gesellschaft zur Förderung der angewandten Forschung e.V., 80686 München (DE)
(72) Erfinder: BÖLKE, Nico, 70569 Stuttgart (DE)
(74) Vertreter: Pfenning, Meinig & Partner mbB
(86) Internationale Anmeldenummer: PCT/EP2022/072146
(87) Internationale Veröffentlichungsnummer: WO 2023/012355

(56) Entgegenhaltungen:
- WO-A1-2019/136465
- CN-A- 111 571 568
- DE-A1- 102018 112 558
- US-A1- 2014 158 839
- US-A1- 2015 306 762
- US-A1- 2020 323 724

## Beschreibung

Die Erfindung betrifft ein Exoskelett mit einem Oberkörperelement und einer Beinanbindung, die über ein Gelenk zur elastisch drehbaren Verbindung miteinander verbunden sind. Die Erfindung betrifft außerdem ein Gelenk zur elastischen Verbindung zweier Elemente.

Exoskelette werden dazu genutzt, die Belastung auf den menschlichen Körper zu reduzieren oder die menschliche Kraft um eine zusätzliche Kraftquelle zu erweitern. Diese können aus medizinischen, wirtschaftlichen, militärischen oder weiteren Gründen zum Einsatz kommen.

Passive Exoskelette zur Unterstützung beim Aufrichten des Oberkörpers bzw. Halten des Oberkörpers in vorgebeugter Haltung, d.h. zur primären Unterstützung des unteren Rückenmuskels und hinteren Oberschenkelmuskels, gehören zu einem der häufigsten Exoskelett-Typen. Das erfindungsgemäße Exoskelet ist vorteilhaft ein solches passives Exoskelett. Passiv bedeutet hierbei, dass das Exoskelett ein Feder-Dämpfersystem zur Speicherung und Freigabe von Energie zur Unterstützung des Nutzers besitzt und keine externen Energiequellen, wie Batterien und Motoren.

Diese Exoskelette haben in den meisten Fällen die Möglichkeit, den Federmechanismus an und aus zu stellen, um sich in gewünschten Situationen ohne Unterstützung zu bewegen. Zusätzlich gibt es bei vielen Modellen die Funktion, den Anfangswinkel der Unterstützung in einem definierten Bereich einzustellen.

Diese Funktionen reichen in den meisten Fällen nicht dazu aus, die Unterstützungsleistung an die Vorlieben des Nutzers bzw. die Anforderungen aufgrund der Tätigkeit anzupassen. Die Unterstützungsintensität (an Gelenken: Drehmoment pro Winkelgrad) kann nur bei wenigen Modellen eingestellt werden. Eine Anpassung ist aufgrund unterschiedlicher Eigenschaften (z.B. Körpergewicht) und Vorzüge der Menschen bzw. Anforderungen je nach Bewegung/Tätigkeit (z.B. leichte oder schwere Lasten) vorteilhaft.

Zusätzlich zu einer Unterstützung einer definierten Bewegung sollen Exoskelett eine möglichst große Bewegungsfreiheit aller nicht-unterstützten Bewegungen zulassen. Auf diese Weise fühlt sich der Anwender möglichst wenig beeinträchtig, was zu einer höheren Akzeptanz des Exoskeletts führen kann.

Die Einstellbarkeit der Unterstützung wird bei den meisten Exoskeletten über eine Verstellung des Anfangspunktes der Unterstützung erzielt. Die Unterstützungsintensität (Drehmoment/Winkelgrad) kann in diesen Fällen nicht geändert werden. Es werden lediglich die Unterstützungskurven verschoben, nicht aber die Steigung. Demzufolge kann der Nutzer nur bedingt tätigkeits- oder personenspezifischen Einstellungen vornehmen.

Das Exoskelett Muscle Suit Every der Firma Innophys ist in der Lage, die Steifigkeit des Federsystems einzustellen. Hierzu wird durch eine Handpumpe, einen Kompressor oder eine andere Druckluftquelle der Luftdruck im pneumatischen Federsystem gesteigert oder durch ein Ventil gesenkt. Auf diese Weise wird die Unterstützungsleistung des Systems angepasst. Im Falle der manuellen Pumpe erscheint dieses System eher umständlich und benutzerunfreundlich. Kompressoren haben den Nachteil eines erhöhten Gewichtes für das Exoskelett oder einer Bindung an einen externen Kompressor. Externe Luftdruckspeicher, wie Druckflaschen, müssen in regelmäßigen Abständen gewechselt oder aufgeladen werden.

Die WO 2019 136465 A1 beschreibt ein armtragendes Exoskelett, das einen Armgelenkmechanismus umfasst. Der Armverbindungsmechanismus umfasst ein proximales Glied, ein distales Glied, einen Armkoppler und einen variablen Kraftgenerator. Das distale Glied ist relativ zum proximalen Glied drehbar. Der Armkoppler ist so ausgelegt, dass er den Oberarm einer Person mit dem distalen Glied koppelt. Der variable Kraftgenerator umfasst eine erste Feder und eine zweite Feder, die so konfiguriert sind, dass sie ein Drehmoment zwischen dem proximalen Glied und dem distalen Glied erzeugen.

Die DE 10 2018 112558 A1 beschreibt eine Unterstützungsvorrichtung umfassend eine Körpertrageeinheit, die eingerichtet ist, an einem Körper eines Benutzers einschließlich eines Bereichs um einen Unterstützungszielkörperteil des Benutzers tragbar zu sein; und eine Aktoreinheit, die eingerichtet ist, an der Körpertrageeinheit und dem Unterstützungszielkörperteil befestigbar zu sein, um eine Bewegung des Unterstützungszielkörperteils zu unterstützen.

Die CN 111571568 beschreibt bezieht sich auf eine Exoskelettvorrichtung. Die Exoskelettvorrichtung umfasst einen Energiespeichermechanismus, einen Rückenstützmechanismus, einen Schulterstützmechanismus und einen Handkraftunterstützungsmechanismus, wobei der Rückenstützmechanismus beweglich an dem Energiespeichermechanismus angeordnet ist, der Schulterstützmechanismus mit dem Rückenstützmechanismus verbunden ist und der Handkraftunterstützungsmechanismus mit dem Schulterstützmechanismus verbunden ist.

Die Druckschrift US 2015/0306762 beschreibt Systeme und Verfahren, um ein oder beide Beine eines Benutzers zu stützen, wobei ein Gurtzeug verwendet wird, das so konfiguriert ist, dass es am Körper eines Benutzers getragen wird; und eine Beinstütze, die mit dem Gurtzeug gekoppelt ist und so konfiguriert ist, dass sie ein Bein des Benutzers stützt, wobei die Beinstütze so konfiguriert ist, dass sie die Bewegung des Beins aufnimmt, während sie der Bewegung folgt, ohne die Bewegung des Arms des Benutzers wesentlich zu stören.

Aufgabe der vorliegenden Erfindung ist es, ein Exoskelett mit einstellbarer Unterstützung anzugeben sowie einen Federmechanismus, bei dem das Rückstellmoment einstellbar ist. Es soll außerdem ein Exoskelett angegeben werden, dass eine Torsion und eine seitliche Neigung des Oberkörpers eines Nutzers bei gleichzeitiger Unterstützung beim Vorbeugen mitgeht.

Die Aufgabe wird gelöst durch das Gelenk zur elastischen Verbindung zweier Elemente nach Anspruch 1 und das Exoskelett nach Anspruch 7. Die jeweiligen abhängigen Ansprüche geben vorteilhafte Weiterbildungen des erfindungsgemäßen Gelenks und des erfindungsgemäßen Exoskeletts an.

Im Folgenden soll zunächst das erfindungsgemäße Gelenk zur elastischen Verbindung zweier Elemente beschrieben werden. Die zwei Elemente können beispielsweise ein Oberkörperelement und eine Beinanbindung eines Exoskeletts sein.

Unter einem Gelenk zur elastischen Verbindung soll dabei ein Mechanismus verstanden werden, der einer Drehung um eine Drehgelenkachse eine elastische Kraft bzw. ein elastisches Drehmoment entgegensetzt.

Erfindungsgemäß weist das Gelenk ein um eine Drehgelenkachse drehbares Drehgelenk auf, über das die zwei Elemente gegeneinander drehbar sind. Vorzugsweise liegen dabei die Bewegungsrichtungen, in die sich die zwei Elemente bei der Drehung um die Drehgelenkachse bewegen, in einer Ebene senkrecht zur Drehgelenkachse. Vorzugsweise ist das Drehgelenk genau um die Drehgelenkachse drehbar, also nicht um weitere Achsen.

Das erfindungsgemäße Gelenk weist außerdem eine Umlenkrolle mit einer Rollenachse auf, die zur Drehgelenkachse parallel liegt. Die Rollenachse und die Drehgelenkachse liegen parallel zueinander und können besonders bevorzugt koaxial liegen.

Das erfindungsgemäße Gelenk weist außerdem ein Elastizitätselement mit einem länglichen, biegbaren Umlenkelement auf. Dabei verläuft das Umlenkelement in einer zur Drehgelenkachse senkrechten Ebene und verbindet die beiden Elemente miteinander. Das Umlenkelement liegt an einem Umfang der Umlenkrolle an. Das Elastizitätselement kann dabei entlang des Verlaufs des Umlenkelementes eine elastische Gegenkraft gegen eine auf das Umlenkelement wirkende Zugkraft ausüben. Insbesondere kann das Elastizitätselement eine Kraft ausüben, die Verbindungspunkte des Elastizitätselements mit den beiden Elementen entlang eines durch das Umlenkelement beschriebenen Pfades aufeinander zu zieht. Beispielsweise kann das Elastizitätselement als elastisches Seil oder Gummiband ausgestaltet sein oder als unelastisches Seil, das über ein oder mehrere Federn mit einem oder beiden der zwei Elemente verbunden ist. In ersterem Fall können das elastische Element und das Umlenkelement identisch sein, in letzterem Fall wäre das unelastische Seil das Umlenkelement.

Erfindungsgemäß weist die Umlenkrolle eine Anzahl n an Umfangselementen auf, wobei n ganze Zahl größer oder gleich 1 ist, die um die Rollenachse verteilt sind. Sofern n ≥ 2 ist, bedeutet dies, dass sich die Umfangselemente bezüglich der Rollenachse in unterschiedlichen Richtungen befinden. Vorteilhafterweise können die Umfangselemente zur Rollenachse alle den gleichen Abstand haben. Vorzugsweise sind die Umfangselemente äquidistant um die Rollenachse verteil, jeweils benachbarte Umfangselemente haben also bevorzugt jeweils den gleichen Abstand voneinander. Die Umfangselemente befinden sich außerdem vorzugsweise alle in der gleichen Ebene, die parallel oder koplanar ist zu jener zur Drehgelenkachse senkrechten Ebene, in der das Umlenkelement verläuft. Sofern n = 1 ist, bedeutet, dass das Umfangselement um die Rollenachse verteilt ist, lediglich, dass es von der Rollenachse beabstandet ist und sich vorzugsweise in der besagten zur Drehgelenkachse senkrechten Ebene befindet, die zu der Ebene, in der das Umlenkelement verläuft, parallel oder koplanar ist.

Die dem Umlenkelement des Elastizitätselements zugewandten Ränder des oder der jeweiligen Umlenkelemente bilden den Umfang der Umlenkrolle. Hierzu sei angemerkt, dass es für die Funktion des erfindungsgemäßen Gelenkes nur auf jenen Bereich des Umfangs der Umlenkrolle ankommt, der mit dem Elastizitätselement in Kontakt ist und dadurch dessen Verlauf beeinflusst, wohingegen die Form der Umlenkrolle dort, wo bei bestimmungsgemäßer Verwendung kein Kontakt mit dem Umlenkelement erfolgt, auch die Funktion des Gelenks nicht beeinflusst. Dieser Teilbereich lässt sich dann oft durch ein einzelnes Umfangselement bilden.

Erfindungsgemäß weist die Umlenkrolle eine erste Führungsvorrichtung und eine zweite Führungsvorrichtung auf, wobei die erste Führungsvorrichtung eine der Zahl an Umfangselementen entsprechende Zahl n erster Führungen aufweist, die jeweils in einer zur Rollenachse senkrechten Ebene verlaufen und durch die jeweils eines der Umfangselemente geführt ist. Die erste Führungsvorrichtung weist also für jedes der Umfangselemente eine eigene Führung auf, die dieses Umfangselement führt.

Die zweite Führungsvorrichtung weist zumindest eine zweite Führung auf, die in einer zur Rollenachse senkrechten Ebene verläuft, und durch welche die Umfangselemente geführt sind. Es ist dabei eine einzige zweite Führung ausreichend, es können jedoch auch mehrere zweite Führungen vorgesehen sein, die jeweils ein oder mehrere der Umfangselemente führen, wobei jede dieser zweiten Führungen andere Umfangselemente führt. In einer vorteilhaften Ausgestaltung können eine der Anzahl an Umfangselementen gleiche Anzahl n an zweiten Führungen vorgesehen sein, von denen jede genau eines der Umfangselemente führt.

Erfindungsgemäß sind die ersten und zweiten Führungen so angeordnet, dass Projektionen der ersten und zweiten Führungen, in denen das gleiche Umfangselement geführt ist, sich in nicht verschwindenden Winkeln schneiden. Projiziert man also eine der ersten Führungen und eine der zweiten Führungen, die das gleiche Umfangselement führen, in Richtung der Rollenachse auf eine gemeinsame Ebene, so schneiden sich diese Projektionen in dieser gemeinsamen Ebene in nicht-verschwindenden Winkeln. Die Projektionen schneiden sich also in einem Schnittpunkt. Da beide Führungen das gleiche Umfangselement führen, ist die Position des Führungselementes auf diese Weise eindeutig auf den Schnittpunkt festgelegt. Die erste Führungsvorrichtung und die zweite Führungsvorrichtung können um die Rollenachse gegeneinander drehbar sein. Durch eine solche Drehung verschieben sich die ersten und zweiten Führungen gegeneinander und dadurch auch der besagte Schnittpunkt ihrer Projektionen. Damit verschiebt sich auch der Punkt, an dem die Umfangselemente erhalten werden. Durch Drehen der ersten und zweiten Führungsvorrichtung gegeneinander können also die Umfangselemente verschoben werden.

In einer vorteilhaften Ausgestaltung der Erfindung können die ersten Führungen gerade Linearführungen sein, die besonders vorteilhaft radial zur Rollenachse verlaufen können. Die Umfangselemente können hierzu auf ihrer der ersten Führungsvorrichtung zugewandten Seite Vorsprünge aufweisen, die in die entsprechende erste Führung eingreifen. Beispielsweise kann die jeweilige erste Führung als Schiene ausgestaltet sein, in die ein Vorsprung des entsprechenden Umfangselements eingreift. Dabei kann der Vorsprung einen Umfang in einer Ebene senkrecht zur Längsrichtung der ersten Führung haben, der parallel läuft zum Umfang der Innenwand der entsprechenden ersten Führung in derselben Ebene.

In einer weiteren vorteilhaften Ausgestaltung der Erfindung kann die zumindest eine zweite Führung spiralförmig verlaufen. Unter einem spiralförmigen Verlauf kann dabei insbesondere ein Verlauf verstanden werden, der sich über einen nicht verschwindenden Winkelbereich um die Rollenachse erstreckt und in diesem Verlauf seinen Abstand von der Rollenachse verändert, besonders bevorzugt streng monoton ändert. Ist dabei eine einzige zweite Führung vorgesehen, so kann diese als Spirale ausgestaltet sein, die mit einem oder mehreren vollständigen Umläufen um die Rollenachse verläuft und dabei ihren Abstand zur Rollenachse mit konstanter Steigung vergrößert. Ist beispielsweise für jedes Umfangselement eine eigene zweite Führung vorgesehen, so kann diese sich auch über einen Teil des Umfangs um die Rollenachse erstrecken und in diesem Winkelbereich von einem maximalen zu einem minimalen Abstand zur Rollenachse verlaufen.

Vorteilhafterweise können die Umfangselemente zwischen den Führungsvorrichtungen angeordnet sein und besonders bevorzugt auf ihren den Führungsvorrichtungen zugewandten Oberflächen jeweils einen Führungsschlitten aufweisen, der in die entsprechende Führung eingreift und in dieser verschiebbar gelagert ist.

In einer vorteilhaften Ausgestaltung können die Führungsvorrichtungen als Scheiben, besonders bevorzugt kreisförmige Scheiben, ausgestaltet sein, in die die entsprechenden Führungen als Nuten oder längliche Durchgangslöcher eingebracht sind. Es kann dabei die erste Führungsvorrichtung als Scheibe ausgestaltet sein, in welche die ersten Führungen als Nuten oder Langlöcher eingebracht sind und es kann die zweite Führungsvorrichtung als Scheibe ausgestaltet sein, in die die zumindest eine zweite Führung als Nut oder Langloch eingebracht ist.

Durch die Kombination der Umlenkrolle und des Umlenkelementes ist ein Rückstellmoment erzeugbar, das einstellbar ist, wobei das Rückstellmoment pro Beugewinkelgrad einstellbar ist.

In einer vorteilhaften Ausgestaltung kann das Gelenk in einem Exoskelett zum Einsatz kommen, wobei dann eines der zwei Elemente eine Beinanbindung des Exoskeletts sein kann und das andere der zwei Elemente ein Oberkörperelement des Exoskeletts sein kann. Auf diese Weise können die Beinanbindung und das Oberkörperelement elastisch gegeneinander drehbar sein. Vorteilhafterweise kann dabei die Federkraft bei einer Bewegung, bei der der Benutzer sich vorbeugt, aufrichtend wirken und auf diese Weise die Rückenmuskeln entlasten.

Die Erfindung betrifft auch ein Exoskelett, das zumindest eine Beinanbindung aufweist, mit der das Exoskelett an einem Bein eines Benutzers befestigbar ist, und das außerdem ein Oberkörperelement aufweist, mit dem das Exoskelett am Oberkörper des Benutzers befestigbar ist, wobei die Beinanbindung und das Oberkörperelement über ein Gelenk wie vorstehend beschrieben miteinander verbunden sind, wobei die Beinanbindung und das Oberkörperelement die zwei Elemente sind, die elastisch mittels des Gelenkes verbunden werden. Weist ein solches Exoskelett vorteilhafterweise jeweils eine Beinanbindung für jedes Bein des Benutzers auf, so sind diese Beinanbindungen vorzugsweise jeweils über ein Gelenk wie vorstehend beschrieben mit dem Oberkörperelement verbunden.

Es wird nachfolgend außerdem ein Exoskelett angegeben, das ein Oberkörperelement aufweist, mit dem das Exoskelett am Oberkörper eines Benutzers befestigbar ist und das zumindest eine Beinanbindung aufweist, mit der das Exoskelett an zumindest einem Bein des Benutzers befestigbar ist. Es weist dabei das Oberkörperelement zumindest ein Zwischenelement auf, das mit der Beinanbindung über zumindest ein Gelenk zur elastisch um eine Drehgelenkachse drehbaren Verbindung der Beinanbindung mit dem Zwischenelement verbunden ist. Vorteilhafterweise kann dabei das Gelenk ein Gelenk zur elastischen Verbindung zweier Elemente wie vorstehend beschrieben sein. Mittels des Gelenkes sind das Zwischenelement und die Beinanbindung gegeneinander drehbar.

Außerdem weist das Oberkörperelement zumindest eine Oberkörperanbindung auf, mit der das Oberkörperelement am Oberkörper des Benutzers befestigbar ist. Die Oberkörperanbindung kann zum Beispiel eine Rückenplatte aufweisen, an der ein Gurtgeschirr befestigt ist, mit dem die Rückenplatte am Oberkörper befestigbar ist. Beispielsweise kann das Gurtgeschirr zwei Schultergurte aufweisen, die, wenn das Exoskelett bestimmungsgemäß getragen wird, von der Rückenplatte über die Schulter zum Brustbereich des Nutzers verlaufen. Vorteilhafterweise kann das Gurtgeschirr außerdem einen Oberkörpergurt aufweisen, der von der Rückenplatte unter den Armen hindurch um den Brustkorb verläuft und vor dem Brustbereich mit den Schultergurten befestigt ist.

Weiter weist das Oberkörperelement zwei Stützstäbe auf, über welche die Oberkörperanbindung mit dem zumindest einen Zwischenelement verbunden ist.

Die Stützstäbe sind so angeordnet, dass sie bei bestimmungsgemäßer Verwendung des Exoskeletts durch den Benutzer jeweils in bezüglich des Benutzers lateraler Richtung an einem der zumindest einen Zwischenelemente angreifen. Unter der lateralen Richtung wird hierbei die seitliche Richtung des Benutzers verstanden, also die Richtung seiner rechte oder seine linke Seite. Die Stützstäbe können also bei bestimmungsgemäßer Verwendung des Exoskeletts durch den Benutzer an der rechten oder linken Seite des Benutzers an dem entsprechenden Zwischenelement angreifen.

Vorzugsweise befindet sich das Zwischenelement in bestimmungsgemäß getragenem Zustand auf Beckenhöhe des Benutzers, und vorzugsweise greifen die zwei Stäbe im bestimmungsgemäß getragenen Zustand auf Beckenhöhe an dem entsprechenden Zwischenelement an.

Darüber hinaus greifen die zwei Stäbe rückenseitig an der Oberkörperanbindung an, besonders bevorzugt an der besagten Rückenplatte, sofern vorhanden. Die Stützstäbe sind dabei so ausgestaltet und angeordnet, dass sie Rotationen der Oberkörperanbindung gegenüber dem Zwischenelement um Achsen blockieren, die durch Verbindungspunkte der Stützstäbe mit dem zumindest einen Zwischenelement verlaufen. Die Stützstäbe blockieren also Rotationen der Oberkörperanbindung gegenüber dem Zwischenelement um Achsen, die in Links-Rechts-Richtung des Benutzers verlaufen. Sind zwei Beinanwendungen vorgesehen, so kann die Links-Rechts-Richtung als die Richtung definiert werden, in der die Beinanbindungen nebeneinander liegen.

Es kann optional genau ein Zwischenelement vorgesehen sein, dass sich von der linken zur rechten Seite des Benutzers erstreckt. Es können dann beide Stützstäbe an diesem einzigen Zwischenelement angeordnet sein. Es können optional aber auch zwei Zwischenelemente vorgesehen sein, von denen eines an der rechten Seite des Benutzers angeordnet ist und eines an seiner linken Seite.

In einer vorteilhaften Ausgestaltung können die Stützstäbe mit dem zumindest einen Zwischenelement jeweils über ein Stützstabgelenk verbunden sein, das um eine Achse drehbar ist, die bei bestimmungsgemäßer Verwendung bezüglich des Benutzers von vorne nach hinten, also in Bauch-Rückenrichtung, gerichtet ist. Die Achse kann also senkrecht auf der Links-Rechts-Richtung stehen wie oben beschrieben und kann vorteilhafterweise außerdem senkrecht stehen auf einer Richtung, in der die Oberkörperanbindung und die Beinanbindung voneinander beabstandet sind. Das Stützstabgelenk kann dabei ein Drehgelenk sein, dessen Achse in dieser Weise von vorne nach hinten gerichtet ist. In dieser Ausgestaltung erlaubt das Exoskelett eine Körperbewegung zur Seite und überträgt gleichzeitig ein Moment, das beim Vorbeugen stützend wirkt.

Vorteilhafterweise können die Stützstäbe und/oder deren Verbindungen mit der Oberkörperanbindung so ausgebildet sein, dass sie eine Verschiebung der Oberkörperanbindung in Richtung einer Längsrichtung der Stützstäbe erlauben. Vorteilhafterweise können die Stützstäbe und/oder deren Verbindungen mit der Oberkörperanbindung so ausgebildet sein, dass sie eine Verschiebung der Oberkörperanbindung erlauben, die zumindest anteilig in Richtung einer Längsrichtung zumindest eines der Stützstäbe gerichtet ist. Vorteilhafterweise können hierfür die Stützstäbe Teleskopstäbe sein.

In einer vorteilhaften Ausgestaltung können die Stützstäbe jeweils über ein Oberkörpergelenk mit der Oberkörperanbindung verbunden sein, das um eine Achse drehbar ist, die durch Verbindungspunkte der Stützstäbe mit der Oberkörperanbindung verläuft. Derartige Oberkörpergelenke erlauben eine Bewegung der Oberkörperanbindung um diese Achse, was eine Bewegung des Brustkorbs ermöglicht und trotzdem die Unterstützung der Rückenmuskulatur erlaubt.

In einer weiteren vorteilhaften Ausgestaltung dieses Exoskeletts können die Stützstäbe jeweils über ein Oberkörpergelenk mit der Oberkörperanbindung verbunden sein, das um eine Achse drehbar ist, die koaxial liegt zu einer Längsachse des entsprechenden Stützstabs. Dieser Freiheitsgrad ermöglicht eine Torsion des Oberkörpers und erhöht dadurch den Tragekomfort für den Benutzer.

In einer weiteren vorteilhaften Ausgestaltung können die Stützstäbe mit der Oberkörperanbindung jeweils über ein Oberkörpergelenk verbunden sein, das um eine von vorne nach hinten gerichtete Achse drehbar ist. Ein solches Gelenk ermöglicht eine seitliche Bewegung des Oberkörpers und erhöht dadurch den Tragekomfort für den Benutzer.

Vorteilhafterweise können die Verbindungen der Stützstäbe mit der Oberkörperanbindung so ausgestaltet sein, dass sie eine Rotation der Oberkörperanbindung gegenüber den Verbindungsstäben um eine transversal gerichtete Achse erlauben.

Besonders bevorzugt sind die Stützstäbe mit der Oberkörperanbindung jeweils über ein Kugelgelenk als Oberkörpergelenk verbunden. Ein solches ermöglicht die oben genannten Freiheitsgrade mit einem einzigen Gelenk und erlaubt auf diese Weise eine besonders einfache Ausgestaltung der Verbindung der Stützstäbe mit der Oberkörperanbindung.

In einer vorteilhaften Ausgestaltung dieses Exoskeletts können die Stützstäbe folgenden Verlauf haben. Ausgehend von ihren Verbindungspunkten mit dem zumindest einen Zwischenelement, also beispielsweise ausgehend von einem Stützstabgelenk, über das die Stützstäbe an dem Zwischenelement angreifen, können die Stäbe jeweils in einer monotonen Kurve, besonders vorteilhaft einem Kreisbogen, verlaufen und daran anschließend bis zu ihren Verbindungspunkten mit der Oberkörperanbindung gerade verlaufen. Vorteilhafterweise können die Stützstäbe an ihren Verbindungspunkten mit der Oberkörperanbindung einen kleineren Abstand voneinander haben als an ihren Verbindungspunkten mit dem jeweiligen Zwischenelement. Die Stützstäbe verlaufen hier also nicht parallel zueinander, sondern stehen in einem Winkel zueinander.

In einer vorteilhaften Ausgestaltung dieses Exoskelettskann das zumindest eine Zwischenelement mit einer Beckenanbindung verbunden sein. Besonders bevorzugt kann dabei das Zwischenelement mit der Beckenanbindung über ein um die Drehgelenkachse des Gelenks zur elastischen Verbindung drehbares Drehgelenk verbunden sein. Eine solche Beckenanbindung kann beispielsweise das Becken in bestimmungsgemäß getragenen Zustand umgreifen und eine Verschiebung der Zwischenelemente verhindern.

In einer besonders vorteilhaften Ausgestaltung dieses Exoskelettskann die zumindest eine Beinanbindung mit dem zumindest einen Zwischenelement über ein Gelenk zur elastischen Verbindung zwei Elemente wie vorstehend beschrieben verbunden sein, wobei die Beinanbindung und das Zwischenelement die zwei Elemente sind. Sind, was vorteilhaft der Fall ist, zwei Beinanbindungen vorgesehen, so können auch zwei Zwischenelemente vorgesehen sein, wobei die jeweilige Beinanbindung und das jeweilige Zwischenelement jeweils über ein solches Drehgelenk miteinander verbunden sind. Sind zwei Beinanbindungen und nur ein gemeinsames Zwischenelement vorgesehen, so kann jede der Beinanbindungen jeweils über ein solches Gelenk mit dem Zwischenelement verbunden sein.

Das Exosekelett ist vorteilhafterweise ein passives Exoskelett zur Unterstützung beim Aufrichten des Oberkörpers bzw. Halten des Oberkörpers in vorgebeugter Haltung, d.h. zur primären Unterstützung des unteren Rückenmuskels und hinteren Oberschenkelmuskels. Passiv bedeutet hierbei, dass das Exoskelett beispielsweise ein Feder-Dämpfersystem zur Speicherung und Freigabe von Energie zur Unterstützung des Nutzers besitzt und/oder keine externen Energiequellen, wie Batterien und Motoren.

Im Folgenden soll die Erfindung anhand einiger Figuren beispielhaft erläutert werden. Gleiche Bezugszeichen kennzeichnen dabei gleiche oder entsprechende Merkmale. Die in den Beispielen beschriebenen Merkmale können auch unabhängig von dem Beispiel realisiert sein und zwischen den Beispielen kombiniert werden.

Es zeigt
- Fig. 1: das allgemeine Prinzip veränderter Rückstellkraft bei Umlenkung eines Umlenkelementes zwischen zwei Elementen,
- Fig. 2: ein Beispiel einer ersten Führungsvorrichtung,
- Fig. 3: ein Beispiel einer zweiten Führungsvorrichtung,
- Fig. 4: ein Beispiel von Umfangselementen,
- Fig. 5: eine Überlagerung von erster Führungsvorrichtung, zweiter Führungsvorrichtung und Umfangselementen,
- Fig. 6: ein Beispiel einer Umlenkrolle,
- Fig. 7: ein erfindungsgemäßes Gelenk mit zwei Elementen,
- Fig. 8: ein Beispiel einer Umlenkrolle mit nur einem Umfangselement,
- Fig. 9: eine perspektivische Ansicht eines erfindungsgemäßen Exoskeletts,
- Fig. 10: eine Rückenansicht eines erfindungsgemäßen Exoskeletts, und
- Fig. 11: eine linke Seitenansicht eines erfindungsgemäßen Exoskeletts.

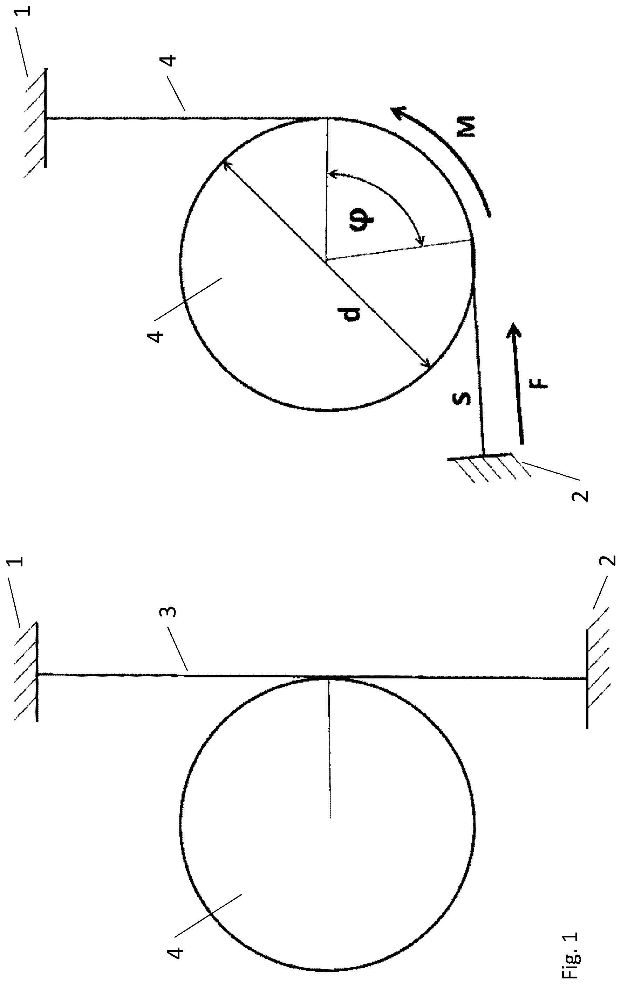

Fig. 1 zeigt das grundlegende Prinzip, das dem erfindungsgemäßen Gelenk zur elastischen Verbindung zweier Elemente 1 und 2 zugrunde liegt. Es wird dabei ein Umlenkelement 3 eines Elastizitätselementes über eine Umlenkrolle 4 geführt. Wie im rechten Teilbild zu erkennen ist, ist die Länge des Umlenkelementes 3 abhängig vom Durchmesser d der Umlenkrolle 4. Vergrößert man den Durchmesser d der Umlenkrolle 4, so vergrößert sich der Kreisbogen, entlang dem das Umlenkelement 3 am Umfang der Umlenkrolle 4 anliegt. Hierdurch wird eine Kraft auf das Umlenkelement 3 ausgeübt, die das Elastizitätselement dehnt. Die Rückstellkraft zwischen den Elementen 1 und 2 wird dadurch größer. Sind die Elemente 1 und 2 gegeneinander drehbar um eine gemeinsame Achse, beispielsweise die Achse der Umlenkrolle 4, gelagert, so erzeugt die Rückstellkraft des Elastizitätselementes 3 ein Rückstelldrehmoment oder Rückstellmoment.

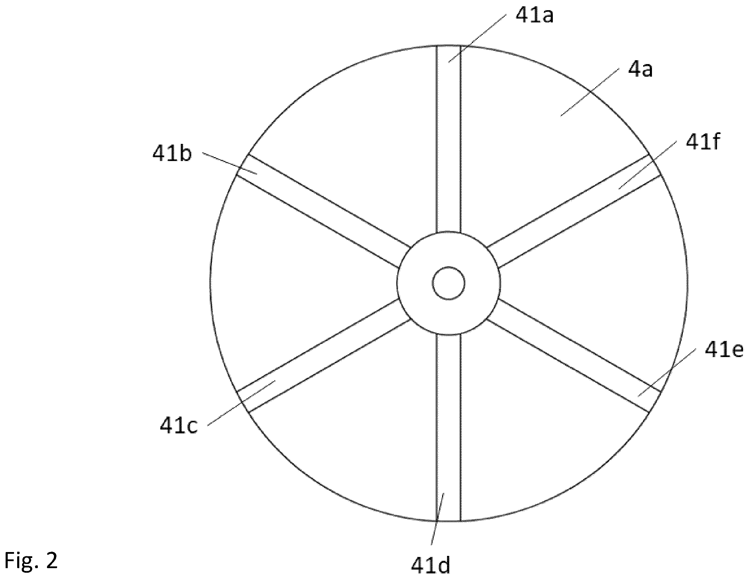

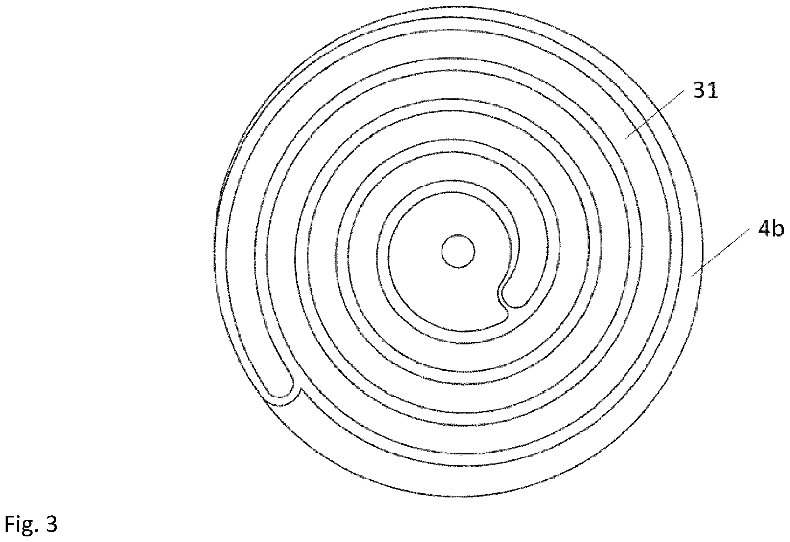

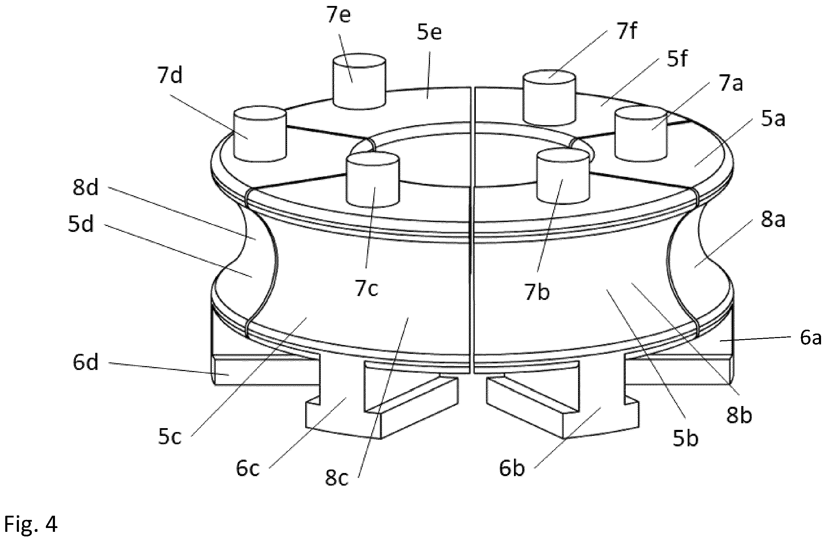

Fig. 2 zeigt eine erste Führungsvorrichtung 4a, die zusammen mit der in Fig. 3 gezeigten zweiten Führungsvorrichtung 4b und den in Fig. 4 gezeigten Umfangselementen 5a bis 5f eine Umlenkrolle eines erfindungsgemäßen Gelenks zusammensetzen. Die in Figur 4 gezeigte Umlenkrolle weist sechs Umfangselemente 5a bis 5f auf. Daher weist die Führungsvorrichtung 4a wie in Fig. 2 gezeigt sechs Linearführungen 41a bis 41f auf, die radial zur Mittelachse der Führungsvorrichtung 4a verlaufen, die hier als Scheibe ausgestaltet ist. Die Führungen 41a bis 41f sind hierbei in die Scheibenfläche eingebrachte Nuten, in die die Umfangselement 5a bis 5f mit Führungsschlitten 6a bis 6f (nur 6a bis 6d sind in Fig. 4 zu erkennen) eingreifen. Die Führungsschlitten 6a bis 6f haben hierbei einen T-förmigen Querschnitt. Die Führungen 41a bis 41f haben entsprechend einen T-förmigen Querschnitt.

Fig. 3 zeigt ein Beispiel einer zweiten Führungsvorrichtung, die im gezeigten Beispiel nur eine spiralförmige Führung 31 aufweist. Die zweite Führungsvorrichtung 4b ist hierbei ebenfalls als Scheibe ausgestaltet, in die die Führung 31 als Nut eingebracht ist. Die Führung 31 umläuft die Rollenachse hier viermal. Die Umfangselemente 5a bis 5f greifen in diese zweite Führung 31 mit Führungsschlitten 7a bis 7f ein, die hier zylinderförmig mit zur Rollenachse parallelen Zylinderachsen ausgestaltet sind. Die zweite Führung 31 ist in den gezeigten Beispielen als Spiralform ausgestaltet. Andere Geometrien sind jedoch auch möglich. Beispielsweise können auch eine Vielzahl an geraden zweiten Führungen 31 vorgesehen sein, die dann entlang einer Geraden verlaufen, die nicht durch die Rollenachse verläuft. Auch andere Geometrien der zweiten Führungen 31 sind vorstellbar.

Fig. 4 zeigt ein Beispiel von sechs Umfangselementen 5a bis 5f, die äquidistant um eine Rollenachse verteilt angeordnet sind. Die äußeren Ränder 8a bis 8f (wovon nur 8a bis 8d in der Fig. 4 zu erkennen sind) bilden den Umfang der Umlenkrolle zumindest dort, wo sie dem in Fig. 4 nicht gezeigten Umlenkelement 3 zugewandt sind. Die äußeren Ränder 8a bis 8f sind in dem in Fig. 4 gezeigten Beispiel rinnenförmig gestaltet, wobei die Rinne des einen Umfangselement 5a bis 5f durch die Rinnen der benachbarten Umfangselemente 5a bis 5f fortgesetzt wird. Die äußeren Ränder 8a bis 8f der Umfangselemente 5a bis 5f liegen dabei alle auf einem gemeinsamen Kreis. In den gezeigten Beispielen beschreiben die Umfangselemente 5a bis 5f einen kreisförmigen Umfang. Dies ist jedoch nicht notwendig, so können die Umfangselemente 5a bis 5f auch ovale Umfangsgeometrien und andere Umfangsgeometrien realisieren.

Es sei darauf hingewiesen, dass die Führungsschlitten 7a bis 7f, die in die zweite Führung 31 eingreifen, bei unterschiedlichen Umfangselementen 5a bis 5f einen unterschiedlichen Abstand zur Rollenachse und zum Rand 8a-8f des entsprechenden Umfangselement haben, was dem Umstand Rechnung trägt, dass die zweite Führung 31 durch ihrem spiralförmigen Verlauf in jeder Richtung einen anderen Abstand zur Rollenachse hat. Der Führungsschlitten 7a bis 7f hat immer gerade den Abstand von der Rollenachse, den die zweite Führung 31 an dem Ort hat, an dem der entsprechende Führungsschlitten 7a bis 7f in die zweite Führung 31 eingreift, wenn die äußeren Ränder 8a bis 8f aller Umfangselemente auf einem gemeinsamen Kreis liegen.

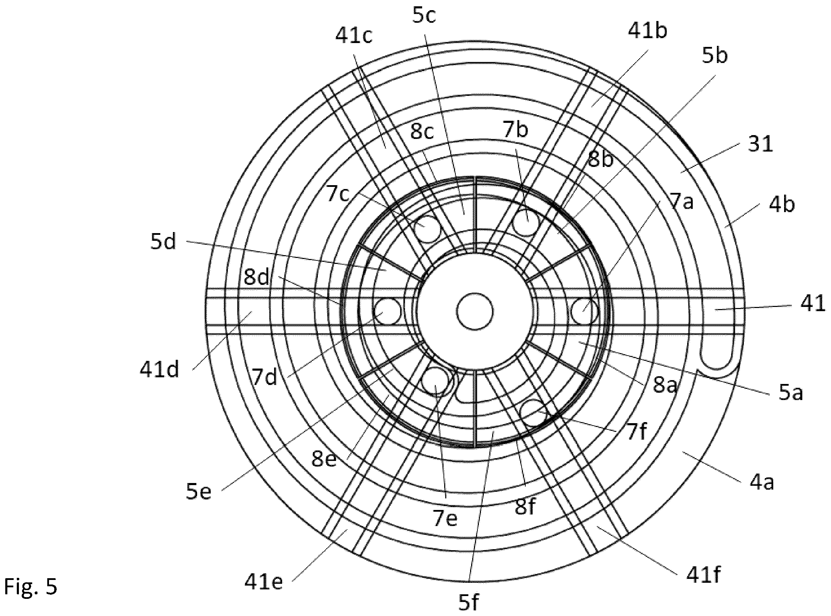

Fig. 5 zeigt eine Überlagerung der in den Figuren 2, 3 und 4 gezeigten Bestandteile der Umlenkrolle, betrachtet in Richtung der Rollenachse. Das zu den Figuren 2, 3 und 4 Gesagte gilt hier analog. Da die Führungsvorrichtungen 4a und 4b als kreisförmige Scheiben ausgestaltet sind, durch deren Mittelpunkte die Rollenachse verläuft, sind im in Fig. 5 gezeigten Beispiel die Führungsvorrichtungen 4a und 4b koaxial und mit parallelen Scheibenflächen übereinander angeordnet. Die äußeren Ränder 8a bis 8f der Umfangselemente 5a bis 5f liegen auf einem gemeinsamen Kreis und bilden den Umfang der Umlenkrolle. Es sei angemerkt, dass hier der Umfang der Umlenkrolle nicht durch den äußeren Rand der Führungsvorrichtungen 4a und 4b bestimmt wird, sondern durch die äußeren Ränder der Umfangselemente 5a bis 5f.

Die Umfangselemente 5a bis 5f sind dort angeordnet, wo die entsprechenden Führungsschlitten 6a bis 6f und 7a bis 7f in die erste bzw. zweite Führung eingreifen. Es ist in Fig. 5 zu erkennen, dass sich die Projektionen der ersten Führungen 41a bis 41f und der zweiten Führung 31 in einem nicht verschwindenden Winkel schneiden. Der Ort, wo diese Führungen sich schneiden, legt fest, wo das entsprechende Umfangselement 5a bis 5f angeordnet ist. Verdreht man die erste Führungsvorrichtung 4a und die zweite Führungsvorrichtung 4b gegeneinander, so verschieben sich die Schnittpunkte und damit die Umfangselemente 5a bis 5f in radialer Richtung. Die Bedingung, dass alle äußeren Ränder 8a bis 8f der Umfangselemente 5a bis 5f entlang eines gemeinsamen Kreises verlaufen, bleibt dabei erhalten, da sich beim Drehen um einen bestimmten Winkel der Führungsvorrichtungen 4a und 4b die Umfangselemente 5a bis 5f in gleichem Maße verschieben.

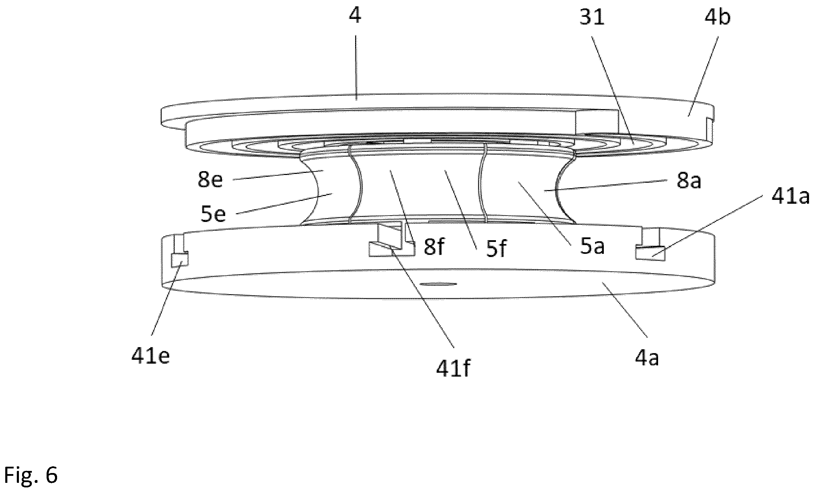

Fig. 6 zeigt die zusammengesetzte Umlenkrolle mit den in den Figuren 2 bis 4 gezeigten Bestandteilen in einer perspektivischen Ansicht. Auf die Beschreibung der Figuren 2, 3 und 4 wird hierzu verwiesen. In Fig. 6 ist außerdem auch der T-förmige Querschnitt der ersten Führungen 41a bis 41f zu erkennen, in denen die Führungsschlitten 6a bis 6f geführt werden.

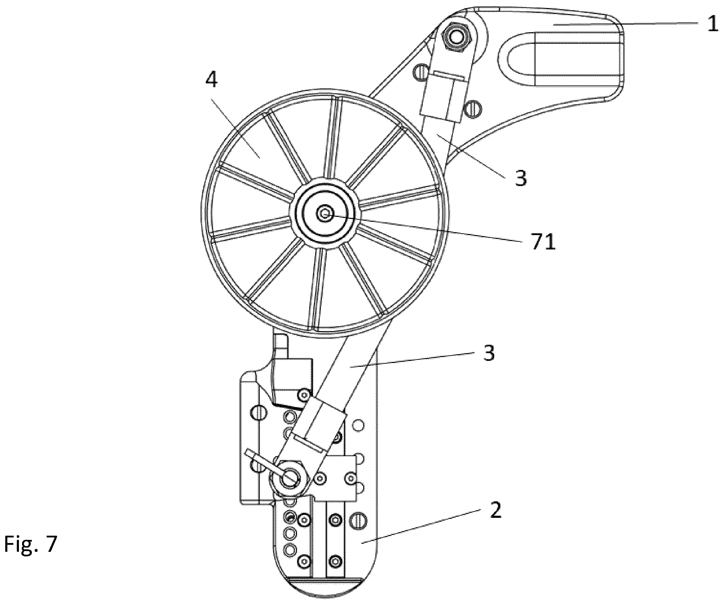

Fig. 7 zeigt schließlich ein vollständiges Gelenk zur elastischen Verbindung zweier Elemente 1 und 2 gemäß der Erfindung. Die Vorrichtung weist ein Drehgelenk 71 auf, das um eine Drehgelenkachse drehbar ist, um die die zwei Elemente 1 und 2 gegeneinander drehbar sind. Zur Drehgelenkachse 71 koaxial liegt die Umlenkrolle 4, deren Rollenachse koaxial zur Drehgelenkachse 71 liegt.

Ein Elastizitätselement 3, das hier mit einem länglichen biegbaren Umlenkelement 3 identisch ist, da es als elastisches Seil 3 ausgestaltet ist, verläuft in einer zur Drehgelenkachse senkrechten Ebene. Das Umlenkelement 3 verbindet die Elemente 1 und 2 miteinander und liegt an einem Umfang der Umlenkrolle 4 an. Dabei ist der Umfang der Umlenkrolle 4 nicht der äußerste Rand der Führungsvorrichtung, sondern wird wie in den Figuren 2 bis 6 gezeigt durch eine Anzahl n mit n ≥ 1 an Umfangselemente gebildet.

Die Umlenkrolle 4 kann hier als Handrad ausgestaltet sein, mit dem die Führungsvorrichtungen 4a und 4b gegeneinander verdrehbar sind. Hierdurch werden die Umfangselemente 5a bis 5f in radialer Richtung nach innen bzw. außen verschoben, wodurch sich der Durchmesser des Umfangs der Umlenkrolle verändert. Dies führt zu einer Dehnung des Elastizitätselements 3, hier in Form des Umlenkelementes 3, so dass sich dessen Rückstellkraft verändert. Hierdurch verändert sich das Rückstellmoment zwischen den Elementen 1 und 2, wenn diese um die Drehachse 71 gegeneinander gedreht werden.

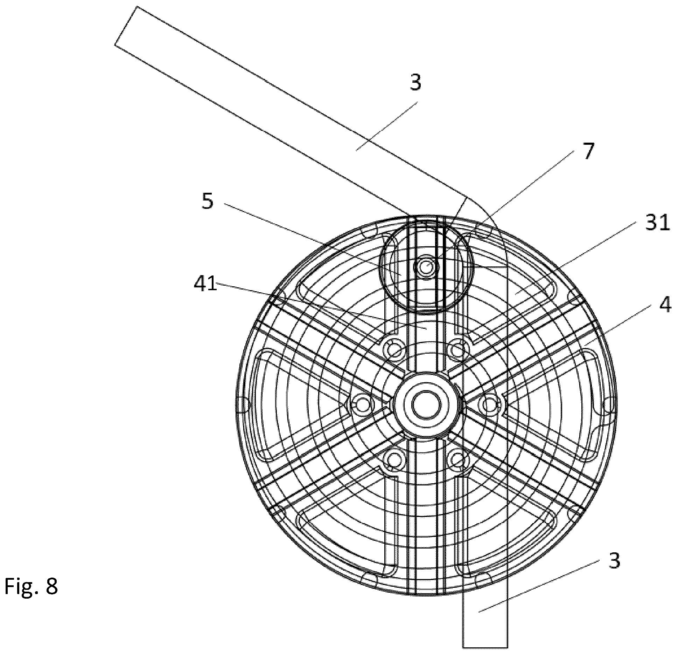

Fig. 8 zeigt ein Beispiel, in dem die Umlenkrolle 4 mit nur einem Umfangselement 5 realisiert ist. Das Umfangselement 5 hat hierbei selbst einen kreisförmigen Umfang und ist drehbar um eine Drehachse, die parallel liegt zur Rollenachse 71. Das eine Umfangselement 5 wird auf der einen Seite in der zweiten Führung 31 geführt und auf der gegenüberliegenden Seite in einer ersten Führung 41. Durch Verdrehen der Führungsvorrichtungen 4a, 4b gegeneinander bewegt sich das Umfangselement 5 von einer inneren zu einer äußeren Position und verlängert oder verkürzt hierdurch die Länge des Umlenkelementes 3. Dies führt wiederum zu einem veränderten Rückstellmoment zwischen den zwei Elementen 1 und 2.

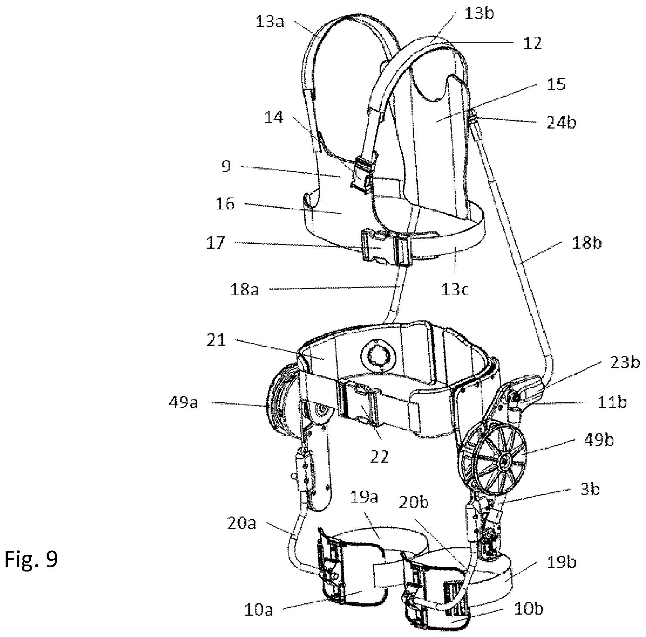

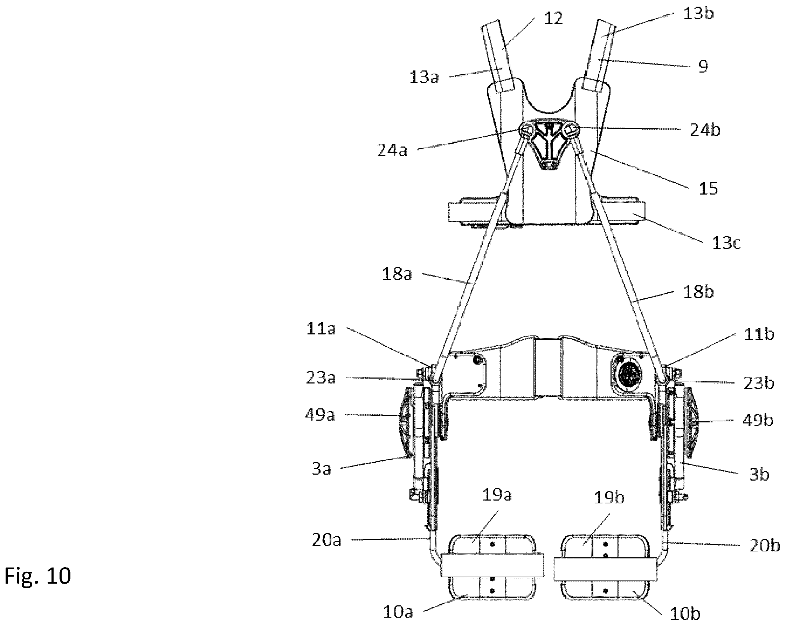

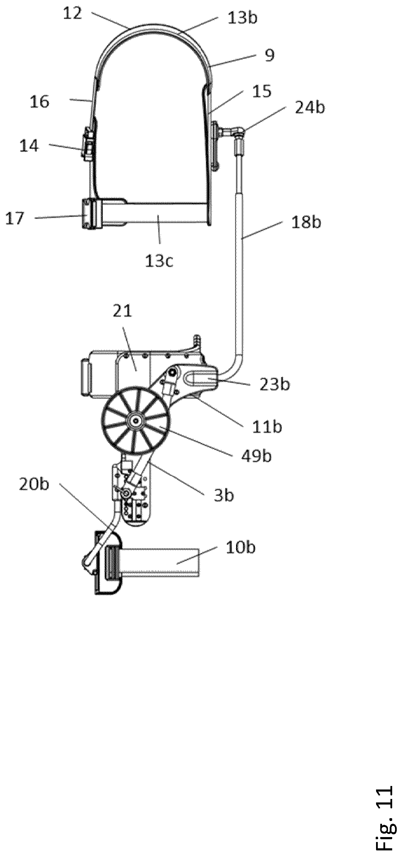

Die Figuren 9, 10 und 11 zeigen ein erfindungsgemäßes Exoskelett. Dabei zeigt Fig. 9 eine perspektivische Ansicht, Fig. 10 eine Rückenansicht und Fig. 11 eine linke Seitenansicht.

Das Exoskelett weist dabei ein Oberkörperelement 9 auf sowie zwei Beinanbindungen 10a und 10b. Mit dem Oberkörperelement 9 ist das Exoskelett am Oberkörper eines Benutzers befestigbar. Mit den Beinanbindungen 10a, 10b ist das Exoskelett an den Beinen des Benutzers befestigbar. Im gezeigten Beispiel weist das Oberkörperelement 9 außerdem zumindest ein, hier zwei Zwischenelemente 11a und 11b auf, die jeweils mit einer der Beinanbindungen 10a und 10b über ein Drehgelenk verbunden sind, das im gezeigten Beispiel wie in den Figuren 1 bis 8 gezeigt ausgestaltet sein kann. Das Oberkörperelement 9 weist eine Oberkörperanbindung 12 auf, mit der das Oberkörperelement 9 am Oberkörper des Benutzers befestigbar ist. Die Oberkörperanbindung 12 weist dabei zwei Schultergurte 13a und 13b auf, die von einer Rückenplatte 15 über die Schultern des Benutzers zu einer Brustplatte 16 verlaufen, die bei bestimmungsgemäßer Verwendung brustseitig angeordnet ist. Einer der Schultergurte 13b ist brustseitig mit einem Verschluss 14 versehen. Die Oberkörperanbindung 12 weist außerdem einen Brustgurt 13c auf, der unter den Armen des Benutzers von der Rückenplatte 15 der Oberkörperanbindung unter den Armen des Benutzers hindurch nach vorne verläuft und dort über die Brustplatte 16 mit den Schultergurten 13a und 13b verbunden ist. Über einen Verschluss 17 ist der Brustgurt 13c an der Brustplatte 16 verschließbar.

Das Oberkörperelement 9 weist außerdem zwei Stützstäbe 18a, 18b auf, die von jeweils einem der Zwischenelemente 11a, 11b zu der Rückenplatte 15 der Oberkörperanbindung 12 verlaufen. Über die Stützstäbe ist also die Oberkörperanbindung 12 mit den Zwischenelementen 11a, 11b verbunden.

Im gezeigten Beispiel sind für jede Seite des Benutzers einer der Stützstäbe 18a, 18b, ein Zwischenelement 11a, 11b, ein Gelenk 49a, 49b mit jeweils einem Umlenkelement 3a, 3b sowie eine Beinanbindung 10a, 10b vorgesehen. Es gibt also für jede Beinanbindung 10a, 10b ein eigenes Gelenk 49a, 49b, und ein eigenes Zwischenelement 11a, 11b sowie eine eigene Stützstange 18a, 18b.

Die Beinanbindungen 10a, 10b weisen jeweils einen Beingurt 19a, 19b auf, der um das Bein des Benutzers verläuft, wenn dieser das Exoskelett bestimmungsgemäß trägt. Die Beinanbindungen 10a, 10b weisen außerdem jeweils eine Verbindungsstange 20a, 20b auf, über die der jeweilige Beingurt 19a, 19b mit dem Drehgelenk 49a, 49b verbunden ist. Das Umlenkelement 3a, 3b ist mit diesen Stützstäben 20a, 20b verbunden. Die Umlenkelemente 3a, 3b erstrecken sich also vom jeweiligen Zwischenelement 11a, 11b um den Umfang der entsprechenden Umlenkrolle 49a, 49b zu der Verbindungsstange 20a, 20b der entsprechenden Beinanbindung 10a, 10b.

Im gezeigten Beispiel weist das Exoskelett außerdem eine Beckenanbindung 21 auf, die sich um das Becken bzw. die Hüfte des Benutzers erstreckt, wenn dieser das Exoskelett bestimmungsgemäß trägt. Über einen Verschluss 22 ist die Beckenanbindung 21 verschließbar.

Die Beckenanbindung 21 ist dabei um die Rollenachse des Gelenks 49a, 49b gegenüber den Zwischenelementen 11a, 11b sowie auch gegenüber den Beinelementen 10a, 10b drehbar gelagert.

Die Stützstäbe 18a, 18b greifen bei bestimmungsgemäßer Verwendung des Exoskeletts durch den Benutzer in bezüglich des Benutzers lateraler Richtung an den entsprechenden Zwischenelementen 11a, 11b an. An der Oberkörperanbindung 12 greifen sie rückenseitig an. Die Stützstäbe 18a, 18b sind dabei so ausgestaltet, dass sie Rotationen der Oberkörperanbindung 12 gegenüber den Zwischenelementen 11a, 11b um Achsen blockieren, die durch Verbindungspunkte der Stützstäbe 18a, 18b mit dem entsprechenden Zwischenelemente 11a, 11b verlaufen.

Die Stützstäbe 18a, 18b sind mit dem entsprechenden Zwischenelement 11a, 11b jeweils über ein Gelenk 23a, 23b verbunden, das um eine Achse drehbar ist, die bei bestimmungsgemäßer Verwendung von vorne nach hinten verläuft, also beispielsweise in Richtung von der Rückplatte 15 zur Brustplatte 16. Gleichzeitig lässt die Verbindung der Stützstäbe 18a, 18b mit den entsprechenden Zwischenelementen 11a, 11b keine Drehung um eine von links nach rechts gerichtete Achse zu. Auf diese Weise wird eine durch das elastische Element 3a, 3b ausgeübte Federkraft auf die Oberkörperanbindung 12 übertragen.

Im gezeigten Beispiel sind die Stützstäbe 18a, 18b als Teleskopstäbe ausgestaltet, so dass sie eine Verschiebung der Oberkörperanbindung 12 in Richtung einer Längsrichtung der Stützstäbe erlauben.

Mit der Oberkörperanbindung 12 sind die Stützstäbe 18a, 18b an der Rückenplatte 15 verbunden. Dabei sind die Stützstäbe 18a, 18b mit der Oberkörperanbindung 12 jeweils über ein Kugelgelenk 24a, 24b verbunden. Durch dieses Kugelgelenk ist die Oberkörperanbindung 12 um eine Achse drehbar, die durch die Verbindungspunkte der Stützstäbe 18a, 18b mit der Oberkörperanbindung 12 verläuft. Darüber hinaus erlauben die Kugelgelenke 24a, 24b eine Drehung der Oberkörperanbindung 12 um eine Achse, die koaxial liegt zur Längsachse der Stützstäbe 18a, 18b. Außerdem sind die Stützstäbe 18a, 18b gegenüber der Oberkörperanbindung 12 um eine von vorne nach hinten gerichtete Achse drehbar.

Die Stützstäbe 18a, 18b haben einen Verlauf, bei dem sie ausgehend von dem Gelenk 23a, 23b, mit dem sie mit dem Zwischenelement 11a, 11b verbunden sind, zunächst in einer kreissegmentförmigen Kurve einen Winkel von 90° durchlaufen und daran anschließend in einen geraden Bereich übergehen, der sich bis zu den Kugelgelenken 24a, 24b erstreckt. Zwischen dem entsprechenden Gelenk 23a, 23b und dem kreissegmentförmigen Teil kann ebenfalls jeweils ein gerader Abschnitt vorgesehen sein.

Es ist in den Figuren außerdem zu erkennen, dass die Stützstäbe 18a, 18b dort, wo sie an die entsprechenden Zwischenelemente 11a, 11b angreifen, einen größeren Abstand voneinander haben als dort, wo sie an die Oberkörperanbindung 12 angreifen. Die Stützstäbe 18a, 18b stehen also mit ihren geraden Abschnitten in einem Winkel von größer als null zueinander.

Ist das Drehgelenk 4a, 4b wie in den Figuren 1 bis 8 beschrieben verstellbar ausgestaltet, so kann durch Verdrehen der Führungselemente 4a, 4b gegeneinander das Rückstellmoment eingestellt werden, das zwischen den Beinanbindungen 10a, 10b und dem Oberkörperelement 9 wirkt. Auf diese Weise ist die Unterstützungsintensität des Exoskeletts einstellbar.

Durch die beschriebenen Freiheitsgrade kann sich der Abstand zwischen der Anwendung der Stützstäbe 18a, 18b an der Oberkörperanbindung 12 und an den Zwischenelementen 11a, 11b dynamisch den Bewegungen des Benutzers anpassen. Hierzu können die Führungsstäbe insbesondere vorteilhaft Teleskopstäbe sein oder eine Linearführung aufweisen.

Im gezeigten Beispiel bildet die obere Anwendung der Stützstäbe 18a, 18b an der Oberkörperanbindung 12 drei rotatorische Freiheitsgrade, was im gezeigten Beispiel durch ein Kugelgelenk bewirkt wird, aber auch durch einen Gelenckopf bewirkt werden kann.

Folgende Umsetzungen sind hierbei möglich. Zum einen kann wie in den Figuren gezeigt ein Kugelgelenk mit einem Teleskopstab vorgesehen sein. Es kann aber auch ein Gelenkkopf mit einem einfachen Stab vorgesehen sein, der durch den Gelenkkopf linear geführt ist. Darüber hinaus ist es auch möglich, ein Kugelgelenk vorzusehen, das mit der Oberkörperanbindung 12, insbesondere der Rückenplatte 15, über eine lineare Schiene verbunden ist. Es wird dann also das Kugelgelenk auf der Linearschiene geführt. Die Stützstäbe 18a, 18b können an den entsprechenden Zwischengelenken 11a, 11b auch anstatt durch ein gebogenes Rohr über ein anderes einachsiges Gelenk mit gleicher Ausrichtung angeordnet sein. Für die Anbindung der Stützstäbe 18a, 18b an der Oberkörperanbindung 12 können alle Kombinationen von ein- oder zweiachsigen Gelenken Anwendung finden, die die gewünschten Freiheitsgrade ermöglichen.

Das erfindungsgemäße Gelenk ermöglicht eine stufenlose Verstellung des Seilrollendurchmessers. Vorteil ist hierdurch die Einstellbarkeit der Unterstützungsintensität pro Winkelgrad der Beugung. Der mögliche einzustellende Bereich ist damit abhängig vom minimalen und maximalen einzustellenden Durchmesser. Dies bietet in den meisten Fällen einen große Einstellbereich. Zusätzlich ist diese Verstellmöglichkeit selbsthemmend (muss nicht gesichert werden) und sehr intuitiv/benutzerfreundlich. Im Vergleich zu anderen Exoskeletten wird so eine neue Funktion eingebracht bzw. eine einfachere und benutzerfreundlichere Verstellung ermöglicht. Wichtig ist diese Funktion, um dem Nutzer die Möglichkeit zu geben, das Exoskelett auf seine/ihre Bedürfnisse einzustellen.

In Bezug auf die Bewegungsfreiheit ermöglicht die Gelenkkette eine große Bewegungsfreiheit des Nutzers. Hierzu zählen besonders:
- Seitliches beugen des Oberkörpers relativ zum Unterkörper
- Tordieren des Oberkörpers
- Seitliches Abspreizen der Beine
- Krümmen des Rückens

Bei derartigen Bewegungen werden keine Kräfte vom Exoskelett auf den Körper übertragen. Die Beugung des Oberkörpers nach vorne und hinten ermöglich dagegen eine Übertragung von Kräften vom Federmechanismus über die Körperanbindungen auf den Nutzer. Im Vergleich zu anderen Exoskeletten wird eine bessere Bewegungsfreiheit des Oberkörpers erzielt. Der Nutzer kann die Tätigkeiten mit minimalen Einschränkungen durchführen und fühlt sich nicht von dem Gerät gehindert, was zu einer besseren Akzeptanz des Exoskeletts führen kann. Andere Exoskelette weisen mehr Einschränkungen der Bewegungsfreiheit, reduzierten Komfort durch Relativbewegungen zwischen Mensch und Exoskelett an den Körperschnittstellen oder abstehende Strukturen auf.

## Patentansprüche

1. Gelenk zur elastischen Verbindung zweier Elemente (1, 2), aufweisend ein um eine Drehgelenkachse drehbares Drehgelenk, über das die zwei Elemente (1, 2) gegeneinander drehbar sind,
eine Umlenkrolle (4)mit einer Rollenachse, die zur Drehgelenkachse parallel liegt,
ein Elastizitätselement mit einem länglichen biegbaren Umlenkelement (3),
wobei das Umlenkelement (3) in einer zur Drehgelenkachse senkrechten Ebene verläuft,
wobei das Umlenkelement (3) die beiden Elemente (1, 2) verbindet und an einem Umfang der Umlenkrolle (4) anliegt,
wobei die Umlenkrolle (4) eine Anzahl n, n ≥ 1, an Umfangselementen (5a) aufweist, die um die Rollenachse verteilt sind und deren dem jeweiligen Umlenkelement (3) zugewandten Ränder den Umfang der Umlenkrolle (4) bilden,
wobei die Umlenkrolle (4) außerdem eine erste Führungsvorrichtung (4a) und eine zweite Führungsvorrichtung (4b) aufweist,
wobei die erste Führungsvorrichtung (4a) n erste Führungen aufweist, die jeweils in einer zur Rollenachse senkrechten Ebene verlaufen und in denen jeweils eines der Umfangselemente geführt ist,
wobei die zweite Führungsvorrichtung (4b) zumindest eine zweite Führung (31) aufweist, die in einer zur Rollenachse senkrechten Ebene verläuft und in der die Umfangselemente geführt sind,
wobei Projektionen der ersten und zweiten Führungen, in denen das gleiche Umfangselement (5a) geführt ist, in Richtung der Rollenachse auf eine gemeinsame Ebene sich in nicht verschwindenden Winkeln schneiden.

2. Gelenk nach dem vorhergehenden Anspruch, wobei die ersten Führungen gerade Linearführungen (41a, 41b, 41c, 41d, 41e, 41f) sind, die vorzugsweise radial zur Rollenachse verlaufen.

3. Gelenk nach einem der vorhergehenden Ansprüche, wobei die zumindest eine zweite Führung (31) spiralförmig verläuft.

4. Gelenk nach einem der vorhergehenden Ansprüche, wobei das Elastizitätselement (3) ein elastisches Seil ist oder ein Seil, dass mit einem der zwei Elemente (1, 2) über ein elastisches Element verbunden ist.

5. Gelenk nach einem der vorhergehenden Ansprüche, wobei eines der zwei Elemente(1, 2) eine Beinanbindung eines Exoskeletts ist und wobei das andere der zwei Elemente ein Oberkörperelement des Exoskeletts ist.

6. Gelenk nach einem der vorhergehenden Ansprüche, wobei die Umfangelemente zwischen den Führungsvorrichtungen (4a, 4b) angeordnet sind und auf ihren den Führungsvorrichtungen (4a, 4b) zugewandten Oberflächen jeweils einen Führungsschlitten aufweisen, der in die entsprechende Führung eingreift und in dieser verschiebbar gelagert ist.

7. Exoskelett aufweisend zumindest eine Beinanbindung (10a, 10b), mit der das Exoskelett an einem Bein eines Benutzers befestigbar ist,
ein Oberkörperelement (9), mit dem das Exoskelett am Oberkörper des Benutzers befestigbar ist,
wobei die Beinanbindung (10a, 10b) und das Oberkörperelement (9) über ein Gelenk nach einem der Ansprüche 1 bis 6 miteinander verbunden sind, wobei die Beinanbindung (10a, 10b) und das Oberkörperelement (9) die beiden Elemente (1, 2) sind.

## Claims

1. Joint to elastically connect two elements (1, 2), comprising a rotary joint which rotates around a pivot joint axis via which the two elements (1, 2) can be rotated relatively to each other,
a deflection roller (4) with a roller axis parallel to the pivot joint axis,
an elasticity element with an elongated flexible deflection element (3),
with the deflection element (3) extending in a plane perpendicular to the pivot joint axis,
with the deflection element (3) connecting the two elements (1, 2) and abutting a circumference of the deflection roller (4),
with the deflection roller (4) having a number n, n ≥ 1, of circumferential elements (5a) which are distributed around the roller axis and whose edges face the respective deflection element (3) to form the circumference of the deflection roller (4),
with the deflection roller (4) further comprising a first guiding device (4a) and a second guiding device (4b),
with the first guiding device (4a) having n first guides, each of which extends into a plane perpendicular to the roller axis and in each of which one of the circumferential elements is guided,
with the second guiding device (4b) having at least one second guide (31) which extends into a plane perpendicular to the roller axis and in which the circumferential elements are guided,
with projections of the first and second guides, into which the same circumferential element (5a) is guided, intersecting at non-vanishing angles on a common plane towards the roller axis.

2. Joint in accordance with the preceding claim, the first guides being straight linear guides (41a, 41b, 41c, 41d, 41e, 41f) which preferably extend radially to the roller axis.

3. Joint according to one of the preceding claims with the at least one second guide (31) extending in a spiral shape.

4. Joint according to one of the preceding claims with the elasticity element (3) being an elastic rope or a rope connected via an elastic element into one of the two elements (1, 2).

5. Joint according to one of the preceding claim with one of the two elements (1, 2) being a leg attachment of an exoskeleton and the other of the two elements being an upper body element of the exoskeleton.

6. Joint according to one of the preceding claims with the circumferential elements being arranged between the guiding devices (4a, 4b) and each having a guide block on their surfaces which face the guiding devices (4a, 4b), which engages in the corresponding guide and is mounted in the latter for displaceabilty.

7. Exoskeleton comprising at least one leg attachment (10a, 10b) with which the exoskeleton can be attached to a user's leg, an upper body element (9) with which the exoskeleton can be attached to the user's upper body,
with the leg attachment (10a, 10b) and the upper body element (9) being connected to each other via a joint according to one of the claims 1 to 6, with the leg attachment (10a, 10b) and the upper body element (9) being the two elements (1, 2).

## Revendications

1. Articulation pour la liaison élastique de deux éléments (1, 2), présentant une articulation tournante pouvant tourner autour d'un axe d'articulation tournante, par l'intermédiaire de laquelle les deux éléments (1, 2) peuvent tourner l'un par rapport à l'autre,
une poulie de renvoi (4) avec un axe de poulie qui est parallèle à l'axe d'articulation tournante,
un élément d'élasticité avec un élément de renvoi (3) allongé et flexible,
dans laquelle l'élément de renvoi (3) s'étend dans un plan perpendiculaire à l'axe d'articulation tournante,
dans laquelle l'élément de renvoi (3) relie les deux éléments (1, 2) et s'applique sur une périphérie de la poulie de renvoi (4),
dans laquelle la poulie de renvoi (4) présente un nombre n, n ≥ 1, d'éléments périphériques (5a) qui sont répartis autour de l'axe de poulie et dont les bords tournés vers l'élément de renvoi (3) respectif forment la périphérie de la poulie de renvoi (4),
dans laquelle la poulie de renvoi (4) présente en outre un premier dispositif de guidage (4a) et un deuxième dispositif de guidage (4b),
dans laquelle le premier dispositif de guidage (4a) présente n premiers guidages qui s'étendent chacun dans un plan perpendiculaire à l'axe de poulie et dans lesquels est guidé respectivement l'un des éléments périphériques,
dans laquelle le deuxième dispositif de guidage (4b) présente au moins un deuxième guidage (31) qui s'étend dans un plan perpendiculaire à l'axe de poulie et dans lequel les éléments périphériques sont guidés,
dans laquelle des projections des premier et deuxième guidage, dans lesquels le même élément périphérique (5a) est guidé, dans la direction de l'axe de poulie sur un plan commun, se coupent selon des angles non nuls.

2. Articulation selon la revendication précédente, dans laquelle les premiers guidages sont des guidages linéaires droits (41a, 41b, 41c, 41d, 41e, 41f) qui s'étendent de préférence radialement par rapport à l'axe de poulie.

3. Articulation selon l'une quelconque des revendications précédentes, dans laquelle l'au moins un deuxième guidage (31) s'étend en spirale.

4. Articulation selon l'une quelconque des revendications précédentes, dans laquelle l'élément d'élasticité (3) est un câble élastique ou un câble qui est relié à l'un des deux éléments (1, 2) par un élément élastique.

5. Articulation selon l'une quelconque des revendications précédentes, dans laquelle l'un des deux éléments (1, 2) est une attache de jambe d'un exosquelette et dans laquelle l'autre des deux éléments est un élément de torse de l'exosquelette.

6. Articulation selon l'une quelconque des revendications précédentes, dans laquelle les éléments périphériques sont disposés entre les dispositifs de guidage (4a, 4b) et présentent chacun, sur leurs surfaces tournées vers les dispositifs de guidage (4a, 4b), un chariot de guidage qui s'engage dans le guidage correspondant et est monté de manière à pouvoir se déplacer dans celui-ci.

7. Exosquelette présentant au moins une attache de jambe (10a, 10b), avec laquelle l'exosquelette peut être fixé à une jambe d'un utilisateur, un élément de torse (9), avec lequel l'exosquelette peut être fixé au torse de l'utilisateur,
dans lequel l'attache de jambe (10a, 10b) et l'élément de torse (9) sont reliés entre eux par une articulation selon l'une quelconque des revendications 1 à 6, dans lequel l'attache de jambe (10a, 10b) et l'élément de torse (9) sont les deux éléments (1, 2).
